# EUROPEAN PATENT APPLICATION

(11) **EP 4 607 908 A1**
(43) Date of publication of application: **27.08.2025**
(21) Application number: 25157606.2
(22) Date of filing: 13.02.2025
(51) Int. Cl.: H04N 1/60

(54) **COLOR CONVERSION PROGRAM, COLOR CONVERSION APPARATUS, AND COLOR CONVERSION METHOD**

(30) Priority: 20.02.2024 JP 2024023524
(71) Applicant: CANON KABUSHIKI KAISHA, Tokyo 146-8501 (JP)
(72) Inventor: YAMADA, Michihiko, Tokyo 146-8501 (JP)
(74) Representative: TBK

(57) **Abstract**

To provide a mechanism capable of accurately and quickly performing color space conversion. A computer program product including a color conversion program causing a computer (101) to execute a method including a first conversion step (600) of converting a color space of image data by using an input profile (603) and a print profile (604), and a second conversion step (601) of converting the color space of the image data after the conversion by using the print profile and a display profile (607). The input profile has first color information and receives image data. The print profile has second color information and outputs image data as print data when printing by a printing apparatus (200). The display profile has third color information and outputs the image data as display data in displaying on a display unit (106).

## Description

### CROSS REFERENCE TO RELATED APPLICATION

This application claims priority from prior Japanese Patent Application No. 2024-023524, filed on February 20, 2024, and the entire content of which is incorporated herein by reference.

### FIELD OF THE INVENTION

The present disclosure relates to a color conversion program, a color conversion apparatus, and a color conversion method.

### BACKGROUND OF THE INVENTION

In a printing apparatus, such as an MFP (Multi-Function Peripheral), printed matter is obtained by printing on a print sheet (medium) such as plain paper. Further, soft proof is known in which a simulation image of a printed matter is displayed on a color monitor and confirmed before obtaining the printed matter. A user can confirm finished colors in an actual printed matter by referring to the simulation image. In the printed matter that is actually printed, a part where images and characters are printed and a part where nothing is printed are greatly affected by a ground color of the print sheet. Therefore, it is preferable that the simulation image in the soft proof is an image in which the ground color of the print sheet is considered. Japanese Patent Laid-Open Publication No. 2023-081020 discloses a technique that rewrites a profile (color conversion parameter) that a display device applies to color matching (color space conversion) so as to bring a color reproduced by image display by the display device closer to a color of a color patch reproduced by printing by a printing apparatus. In this rewriting, the color is visually designated one by one, and the result is reflected to the profile.

However, when the print sheet is changed from plain paper to recycled paper or high-quality paper, for example, the technique described in the above publication needs to obtain printed matter and to rewrite the profile by visually designating colors one by one, every time the print sheet is changed. As a result, there is a problem that it takes time and effort to perform the color matching.

### SUMMARY OF THE INVENTION

The present invention provides a mechanism capable of accurately and quickly performing color space conversion.

According to a first aspect of the present invention provides computer program products as specified in claims 1 to 15.

Accordingly, a second aspect of the present invention provides a color conversion apparatus as specified in claim 16.

Accordingly, a third aspect of the present invention provides a color conversion method as specified in claim 17.

According to embodiments of the present disclosure, the color space conversion can be performed accurately and quickly.

Further features will become apparent from the following description of exemplary embodiments with reference to the attached drawings.

### BRIEF DESCRIPTION OF THE DRAWINGS

FIG. 1 is a block diagram illustrating a hardware configuration of an image processing apparatus according to a first embodiment.
FIG. 2 is a block diagram illustrating a hardware configuration of a printing apparatus connected to the image processing apparatus illustrated in FIG. 1.
FIG. 3 is a view illustrating a table of relationship between a medium type and a printer output profile.
FIG. 4 is a view illustrating a print image confirmation screen on which a print image to be printed by the printing apparatus can be confirmed.
FIG. 5 is a view illustrating a color conversion process of a comparative example of the embodiment.
FIG. 6 is view illustrating a color conversion process executed by the image processing apparatus.
FIG. 7 is a flowchart illustrating the color conversion process performed in the image processing apparatus to simulate a printed matter output from the printing apparatus.
FIG. 8 is a flowchart illustrating the color conversion process performed in an image processing apparatus in a second embodiment to simulate a printed matter output from the printing apparatus.

### DETAILED DESCRIPTION OF THE PREFERRED EMBODIMENTS

Hereafter, some exemplary embodiments according to the present disclosure will be described in detail by referring to the drawings. However, configurations described in the following embodiments are merely examples, and the scope of the present disclosure is not limited by the configurations described in the embodiments. For example, each unit constituting the present disclosure can be replaced with any configuration capable of exhibiting the same function. In addition, an arbitrary constituent may be added. In addition, two or more arbitrary configurations (features) of the embodiments may be combined.

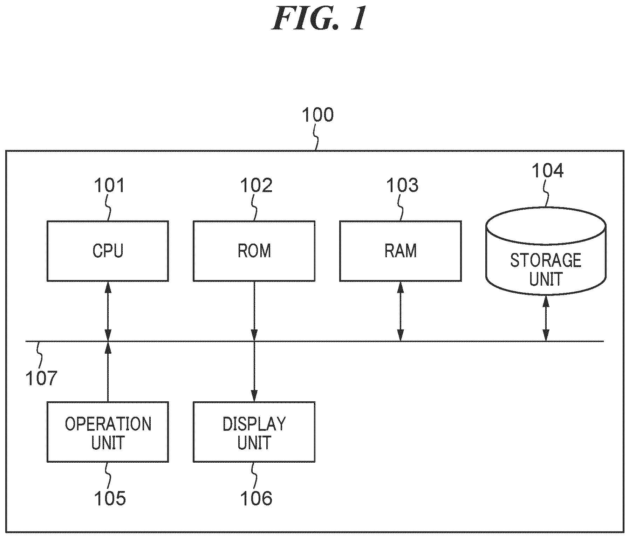

A first embodiment will now be described with reference to FIGS. 1 to 7. FIG. 1 is a block diagram illustrating a hardware configuration of an image processing apparatus related to the first embodiment. The image processing apparatus 100 illustrated in FIG. 1 is configured by an information processing apparatus, such as a desktop or notebook personal computer, a tablet terminal, or a smartphone. The image processing apparatus 100 is not limited to the information processing apparatus, and may be a device such as a DFE (Digital Front End) that performs a data process for inputting data to a printing apparatus.

As shown in FIG. 1, the image processing apparatus 100 has a CPU 101, a ROM 102, a RAM 103, a storage unit 104, an operation unit 105, and a display unit (display device) 106, which are communicatively connected to each other via a system bus 107. The image processing apparatus 100 is a color conversion apparatus capable of performing a color conversion process (a color conversion method) to convert a color space using an input profile 603, a printer output profile (print profile) 604, and a monitor profile (display profile) 607.

The input profile 603 has color information and to which image data is input. The printer output profile 604 has color information and can output image data as print data when the image data is printed by the printing apparatus 200. The monitor profile 607 has color information, and can output image data as display data when a display unit 106 displays the image data. The input profile 603, the printer output profile 604, and the monitor profile 607 are used to improve color reproducibilities of the printing apparatus 200 and the display unit 106. The color information that the input profile 603, the printer output profile 604, and the monitor profile 607 have will be described later.

The CPU 101 is a controller (computer) that controls the entire image processing apparatus 100. The ROM 102 is a read-only memory and stores application programs and parameters that do not require change. The RAM 103 is a volatile random access memory and is used as a work area of the CPU 101 and a temporary storage area of various data.

The storage unit 104 is, for example, an HDD or an SSD, and stores spools of various data, programs, information files, image data, etc., and is used as a work area. The CPU 101 develops an operating system, the application programs, etc. in the ROM 102 and the storage unit 104 to the RAM 103 and executes them. The application programs are stored in the ROM 102 and the storage unit 104 as program codes readable by the CPU 101. The application programs include, for example, a color conversion program for converting a color space of image data.

The CPU 101 also functions as a means for reading an image file from the storage unit 104 and obtaining image data from the image file. The CPU 101 also functions as an image processor that executes various image processes on image data. Specifically, the CPU 101 functions as a color conversion unit that executes the color conversion program to perform color conversion process on image data.

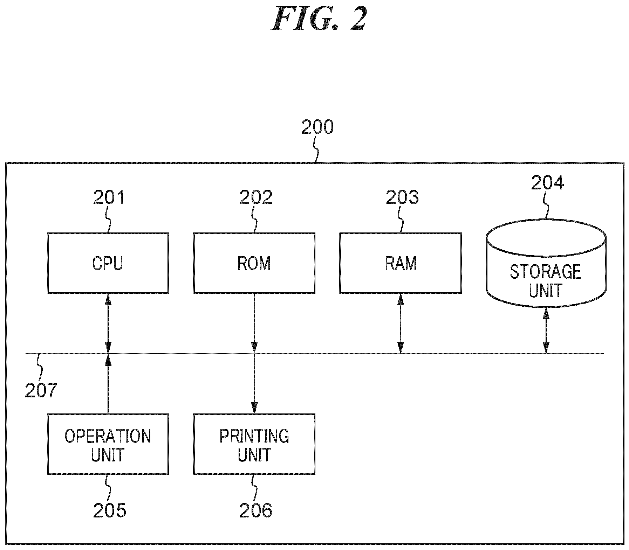

The CPU 101 also functions as a means for recognizing the printing apparatus 200 (see FIG. 2) connected to the image processing apparatus 100. The printing apparatus 200 is, for example, a printer to be used for printing. The CPU 101 also functions as a means for receiving, from the connected printing apparatus 200, media information about the printing apparatus 200, printer-output profile information associated with the media information, and a printer-output profile used for the color conversion process.

The CPU 101 also functions as a means for specifying the printer-output profile corresponding to the printing apparatus 200 on the basis of the media information obtained from the printing apparatus 200, the printer-output profile information associated with the media information, and the printer-output profile.

The CPU 101 obtains the printer output profile corresponding to the printing apparatus 200 from the printing apparatus 200. The CPU 101 also functions as a means for displaying an image on the display unit 106 by developing the image data read from the storage unit 104 to a display memory (not illustrated).

The CPU 101 also functions as a generator that generates data used for printing. The operation unit 105 includes, for example, a keyboard, a mouse, or the like, and can accept an operation by a user to the image processing apparatus 100. The display unit 106 is, for example, a liquid crystal display or a CRT display, and can display the data held in the image processing apparatus 100, the data during the image process, and the data from the outside of the image processing apparatus 100.

FIG. 2 is a block diagram illustrating a hardware configuration of the printing apparatus connected to the image processing apparatus illustrated in FIG. 1. As shown in FIG. 2, the printing apparatus 200 includes a CPU 201, a ROM 202, a RAM 203, a storage unit 204, an operation unit 205, and a printing unit 206, which are communicably connected to each other via a system bus 207. The printing apparatus 200 and the image processing apparatus 100 may be connected to each other by wire or wirelessly. The printing apparatus 200 and the image processing apparatus 100 may be connected via a local area network.

The CPU 201 is a computer (controller) that controls the entire printing apparatus 200. The ROM 202 is a read-only memory and stores application programs and parameters that do not require change. The RAM 203 is a volatile random access memory and is used as a work area of the CPU 201 and a temporary storage area of various data. The storage unit 204 is, for example, an HDD or an SSD, and stores spools of various data, programs, information files, image data, etc., and is used as a work area. The CPU 201 develops the operating system and the application programs stored in the ROM 202 and the storage unit 204 to the RAM 203 and executes them.

The application programs are stored in the ROM 202 and the storage unit 204 as program codes readable by the CPU 201, for example. The CPU 201 extracts the printer output profile stored in the storage unit 204 in association with the medium by using the medium information selected through the operation unit 205. The CPU 201 also functions as a color conversion means that performs the color conversion process in combination with the input profile and rendering intent selected through the operation unit 205.

The CPU 201 also functions as a means that causes the printing unit 206 to print an image. The operation unit 205 includes, for example, operation buttons, a touch panel, a keyboard, a mouse, or the like, and can accept an operation by the user to the printing apparatus 200. The printing unit 206 prints the data transmitted from the image processing apparatus 100, the data held by the printing apparatus 200, and the like.

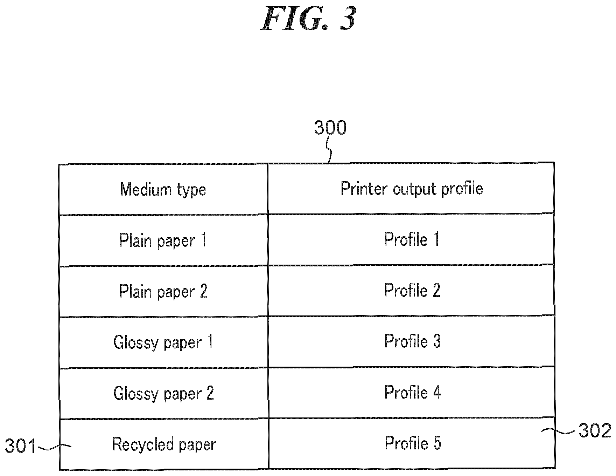

FIG. 3 is a view illustrating a table of relationship between a medium type and a printer output profile. In this embodiment, the printing apparatus 200 is configured so that a plurality of types of print sheets (media), such as plain paper, glossy paper, and recycled paper, can be mounted. The plain paper is a print sheet that is the most versatile among plain paper, glossy paper, and recycled paper, and is also called "PPC paper". The glossy paper is a print sheet having a glossy surface, and is suitable for photo printing. The recycled paper is a print sheet containing recycled paper pulp, and is, for example, more brownish or grayish than plain paper. **In** the printing apparatus 200, when desired image data is printed, one type of print sheet can be selected from among a plurality of types of print sheets.

**In** a media profile list 300 illustrated in FIG. 3, the printer output profile 604 is provided for each type of print sheet used for printing in the printing apparatus 200, that is, for each medium type. For example, when an image is printed on the recycled paper, the image is subjected to the color conversion using a profile 302, which is a "profile 5" corresponding to the recycled paper 301 in the media profile list 300, and then the image is printed. The media profile list 300 is stored in the storage unit 204 of the printing apparatus 200. When a desired medium is added to the media profile list 300, a printer output profile corresponding to the medium is generated and added.

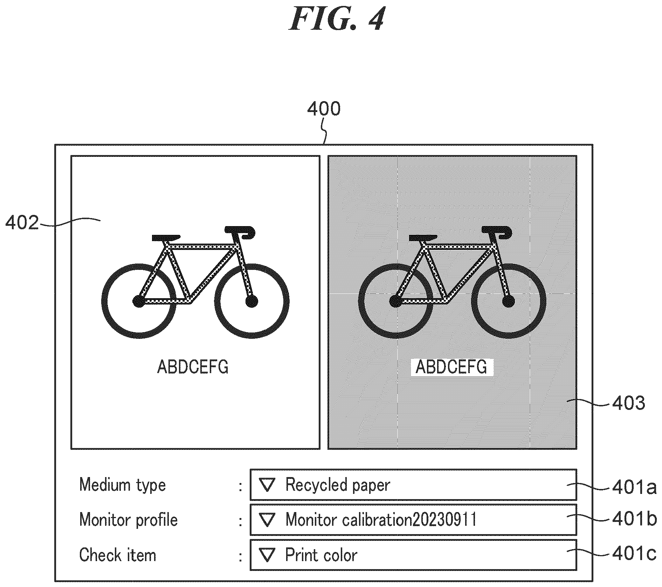

FIG. 4 is a view illustrating a print image confirmation screen on which a print image to be printed by the printing apparatus can be confirmed. The print image confirmation screen 400 illustrated in FIG. 4 includes a medium type selection list 401a, a monitor profile list 401b, a check item list 401c, an original image display area 402, and a preview image display area 403. **In** the medium type selection list 401a, all the media types (paper brands) registered in the media profile list 300 are displayed in a pop-up manner, and one medium type can be selected from among all the media types. **In** the display example illustrated in FIG. 4, the "recycled paper" is selected in the medium type selection list 401a. **In** this case, the profile 302, which is the "profile 5", is used for the color conversion process as the printer output profile 604.

**In** the monitor profile list 401b, all the monitor profiles usable in the color conversion process are displayed in a pop-up manner, and one monitor profile 607 can be selected from among all the monitor profiles. In the display example illustrated in FIG. 4, "monitor calibration 20230911" is selected in the monitor profile list 401b.

In the check item list 401c, all items that can be checked for a preview image displayed in the preview image display area 403 are displayed in a pop-up manner, and one item can be selected from among all the items. In the display example illustrated in FIG. 4, a "print color" is selected in the check item list 401c.

In the original image display area 402, a preview image of the print data before the color conversion is displayed. In the preview image display area 403, a preview image of the print data after the color conversion is displayed. For example, when the "recycled paper" is selected in the medium type selection list 401a and the "print color" is selected in the check item list 401c, a preview image of a printed matter that would be obtained by printing the print data after the color conversion on the recycled paper is displayed.

As described above, the recycled paper has a brown or grayish ground color. Therefore, when the image is printed on the recycled paper, the ground color of the recycled paper affects the printing result (printed matter). In the display example illustrated in FIG. 4, the preview image of the preview image display area 403 reproduces the print color affected by the ground color of the recycled paper.

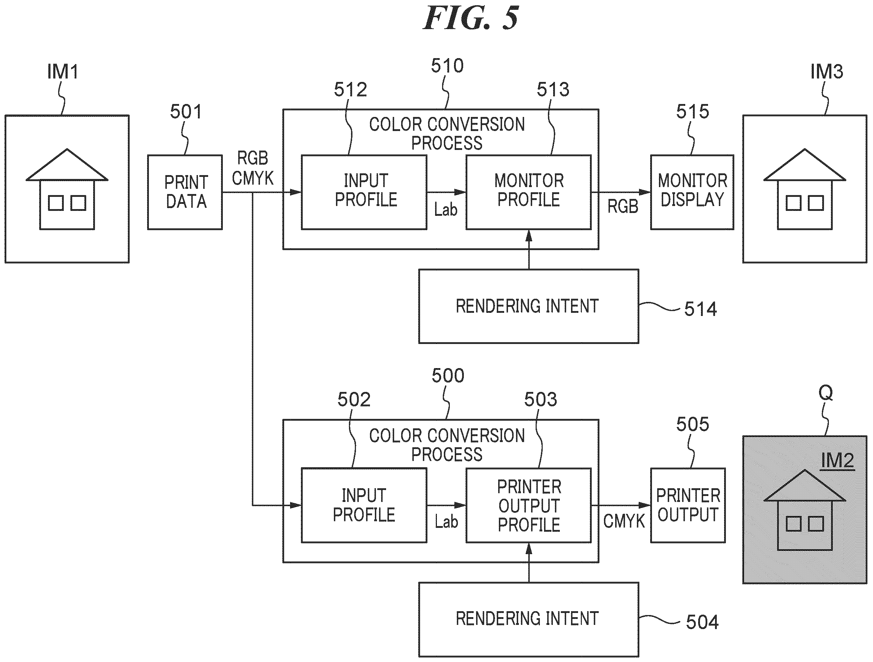

FIG. 5 is a view illustrating a color conversion process of a comparative example of the embodiment. The color conversion process 500 illustrated in FIG. 5 is executed by a printing apparatus 200, and a color conversion process 510 is executed by an image processing apparatus. First, the color conversion process 500 will be described.

As shown in FIG. 5, the color conversion process 500 uses an input profile 502 and a printer output profile 503 in sequence. Print data (image data) 501 is input to the input profile 502. The print data 501 includes, for example, an image IM1 illustrated in FIG. 5. The input profile is a file for converting an image expressed in an RGB color space or a CMYK color space into an image expressed in an L*a*b* color space. That is, the input profile is a lookup table in which values of colors expressed in the RGB format or the CMYK format are respectively associated with values of colors expressed in the L*a*b* format in a one-to-one manner.

The L*a*b* color space is a device independent (model independent) color space that does not depend on the model of the printing apparatus 200 and is standardized by International Illumination Committee (CIE), for example. Instead of the L*a*b* color space, an XYZ color space may be used. On the other hand, the RGB color space and the CMYK color space are device dependent (model dependent) color spaces that are individually set for each model according to the model of the printing apparatus 200.

In the input profile 502 to which the print data 501 is input, the image expressed in the RGB color space or the CMYK color space of the print data 501 is converted into the image expressed in the L*a*b* color space. The data including the L*a*b* color space obtained by the input profile 502 is input to the printer output profile 503.

The printer output profile is a file for converting an image expressed in the L*a*b* color space to an image expressed in the CMYK color space. In the printer output profile 503, the image expressed in the L*a*b* color space is converted into an image expressed in the CMYK color space. When the print sheet used for printing is the recycled paper, the above described "profile 5" is selected as the printer output profile 503. Then, the printing apparatus 200 outputs a printed matter Q that the image IM2 is printed on the recycled paper as the printer output 505 from the printing unit 206. The printed matter Q reflects the ground color of the recycled paper.

When data in the L*a*b* color space exceeding the color gamut reproducible by the printing apparatus 200 is input to the printer output profile 503, it is preferable to perform gamut mapping for mapping colors so that the colors fall within the color gamut the printing apparatus 200. The printer output profile 503 has a plurality of (normally three) color conversion tables to which the gamut mapping method is applied. One of these color conversion tables is selected according to a designation by a rendering intent 504.

The rendering intent designates (sets) relative chromaticity retention in order to reproduce the colors of the image IM1 itself included in the print data 501 as much as possible. Then, the printer output profile 503 applies the color conversion process that subtracts (cancels) a ground color component of the recycled paper by the designation of the color conversion table by the rendering intent 504. This enables printing on the recycled paper with the color of the image IM1 itself reproduced as much as possible.

In addition, for example, when a printing apparatus of which a color tone is influenced by temperature or humidity is used as the printing apparatus 200, it is preferable to perform calibration so to always output a printed matter with the same color tone. The calibration is preferably performed for each print sheet. The calibration result is preferably fed back to the printer output profile 503. This further improves the color reproducibility.

Further, although the relative chromaticity retention is selected by the rendering intent 504 in this embodiment, this is not limiting. For example, it is also possible to designate that priority is given to smoothness of gradation at the time of printing over color reproduction, or priority is given to a more vivid print result.

Next, the color conversion process 510 will be described. As shown in FIG. 5, in the color conversion process 510, an input profile 512 and a monitor profile 513 are used in sequence. The print data 501 is input to the input profile 512. A profile similar to the input profile 502 is designated as the input profile 512.

In the input profile 512 to which the print data 501 is input, the image of the print data 501 expressed in the RGB color space or the CMYK color space is converted into the image expressed in the L*a*b* color space. The monitor profile 513 receives data including the L*a*b* color space obtained by the input profile 512.

The monitor profile is a file to convert an image expressed in the L*a*b* color space to an image represented in the RGB color space. In the monitor profile 513, the image expressed in the L*a*b* color space is converted into the image expressed in the RGB color space. Then, an image IM3 is displayed as a monitor display 515 on the display unit 106 in the image processing apparatus 100. The image IM3 is different from the printed matter Q and the ground color of the recycled paper is not reflected to the image IM3. Therefore, the color tone of the image IM3 cannot be visually recognized to be identical to that of the printed matter Q (image IM2). And it is not preferable to use the image IM3 as the preview image of the printed matter Q.

When the data in the L*a*b* color space exceeding the color gamut reproducible by the image processing apparatus 100 is input to the monitor profile 513, it is preferable to perform gamut mapping for mapping colors so that the colors fall within the color gamut of the image processing apparatus 100. The monitor profile 513 has a plurality of color conversion tables to which the gamut mapping method is applied. One of these color conversion tables is selected by the designation of the rendering intent 514.

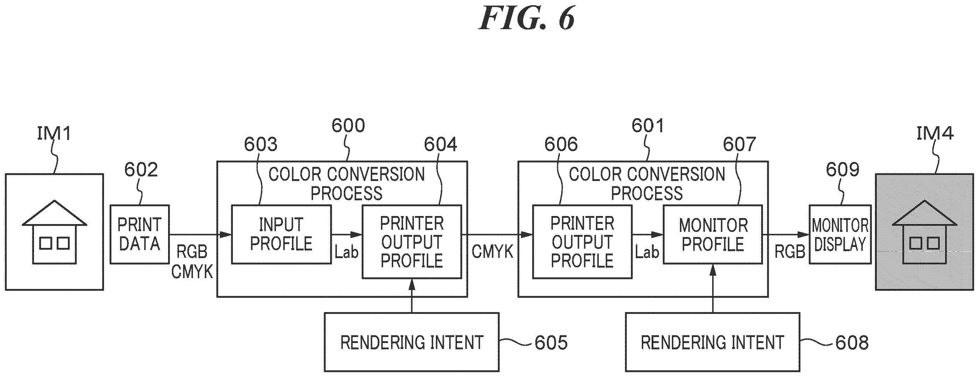

FIG. 6 is a view illustrating the color conversion process executed by the image processing apparatus. As illustrated in FIG. 6, the image processing apparatus 100 sequentially and continuously executes a color conversion process (first conversion step) 600 and a color conversion process (second conversion step) 601. First, the color conversion process 600 will be described. In the color conversion process 600, the input profile 603 and the printer output profile 604 are used in sequence. The input profile 603 and the printer output profile 604 function as a first conversion unit that converts the color space in the color conversion process 600.

The print data 602 is input to the input profile 603. A profile similar to the input profile 502 is designated as the input profile 603. And data similar to the print data 501 is used as the print data 602. Therefore, the print data 602 includes the image IM1.

In the input profile 603 to which the print data 602 is input, the image expressed in the RGB color space or the CMYK color space of the print data 602 is converted into the image expressed in the L*a*b* color space. The data including the L*a*b* color space obtained by the input profile 603 is input to the printer output profile 604. As the printer output profile 604, the same one as the printer output profile 503, that is, the above-described "profile 5" is designated.

Then, in the printer output profile 604, the image expressed in the L*a*b* color space is converted to the image expressed in the CMYK color space. In the process in the printer output profile 604, one color conversion table is selected according to designation by a rendering intent 605 similar to the rendering intent 504. Such a color conversion process 600 generates the data having the CMYK color space that falls within the color gamut of the printing apparatus 200.

Next, the color conversion process 601 executed after the color conversion process 600 will be described. In the color conversion process 601, a printer output profile 606 and the monitor profile 607 are used in sequence. The printer output profile 606 and the monitor profile 607 function as a second conversion unit that converts the color space in the color conversion process 601. The data having the CMYK color space that falls within the color gamut of the printing apparatus 200, which is generated by the color conversion process 600 using the printer output profile 606 as an input profile, is input to the printer output profile 606.

A profile similar to the printer output profile 604 is designated as the printer output profile 606. In the printer output profile 606, an image expressed in the CMYK color space is converted into an image expressed in the L*a*b* color space.

Note that in general, a profile has two functions. The first function converts an image expressed in the RGB color space or the CMYK color space, that is, an image expressed in the device dependent color space, into an image expressed in the L*a*b* color space, that is, an image expressed in the device independent color space. The second function converts an image expressed in the L*a*b* color space into an image expressed in the RGB color space or the CMYK color space, which is opposite to the first function.

The printer output profile 604 is performing the second function, while the printer output profile 606 is performing the first function. Whether the first function or the second function is performed is switched depending on what color space the input data has.

The data including the L*a*b* color space obtained by the printer output profile 606 is input to the monitor profile 607. In the monitor profile 607, the image expressed in the L*a*b* color space is converted into the image expressed in the RGB color space. Then, an image IM4 is displayed as a monitor display (display image) 609 on the display unit 106 in image processing apparatus 100.

In the process in the monitor profile 607, one color conversion table is selected according to designation by a rendering intent 608 similar to the rendering intent 514. The rendering intent 608 designates absolute chromaticity retention. As a result, the image IM4 reflects the ground color of the recycled paper as with the printed matter Q, that is, does not cancel the ground color component of the recycled paper.

Therefore, the color tone of the image IM4 can be visually recognized to be identical to that of the printed matter Q (image IM2) obtained when the data converted in the first conversion step is printed by the printing apparatus 200. Thus, it is preferable to use the image IM4 as the preview image of the printed matter Q.

In this way, since the image processing apparatus 100 sequentially and continuously executes the color conversion process 600 and the color conversion process 601, it is possible to accurately and quickly perform the conversion of the color space suitable for the preview image. In this case, a media white point included in the monitor profile 607 is used as one color conversion table selected according to the designation by the rendering intent 608.

When a color of a patch printed on a print sheet is measured, a measurement value of a part without colorant, i.e., a measurement value of a white display on the display unit 106, is used as the media white point. That is, the measurement value of the white display on the display unit 106 is used as the media white point also for the monitor profile 607 having the measurement value obtained by measuring the ground color of the print sheet.

Then, the user of these media white points enables to perform the color conversion process in which the ground color is taken into consideration. The print data 602 subjected to the color conversion process in this way can be displayed on the display unit 106 in a state in which the ground color of the print sheet (recycled paper) is reproduced with high accuracy. Alternatively, the ground color may be reproduced by using a white point of the color conversion table, that is, a color of a grid point of (C, M, Y, K) = (0, 0, 0, 0) as-is.

In addition, when the display unit 106 is a color monitor, a deviation may occur in a display color due to aging deterioration or the like. In this case, it is preferable to perform calibration for correcting the deviation of the display color. The calibration result is preferably fed back to the monitor profile 607. This further improves the color reproducibility of the display unit 106.

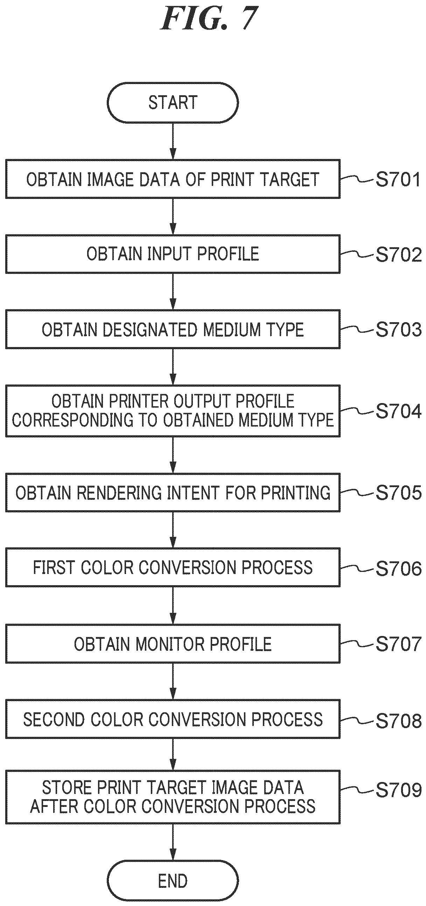

FIG. 7 is a flowchart illustrating the color conversion process performed in the image processing apparatus to simulate a printed matter output from the printing apparatus. The process in each step in the flowchart shown in FIG. 7 is achieved by the CPU 101 reading the program stored in the ROM 102 or the storage unit 104 to the RAM 103 and executing the program.

As shown in FIG. 7, in a step S701, the CPU 101 of the image processing apparatus 100 obtains print data (image data of a print target) to be printed by the printing apparatus 200, which is stored in the storage unit 104, and proceeds with the process to a step S702.

In the step S702, the CPU 101 obtains the input profile used during printing from the storage unit 204 of the printing apparatus 200 and proceeds with the process to a step S703.

In the step S703, the CPU 101 displays the print image confirmation screen 400 on the operation unit 105 of the image processing apparatus 100 and obtains the medium type selected (designated) in the medium type selection list 401a in the print image confirmation screen 400. Then, the process proceeds to a step S704.

In the step S704, the CPU 101 obtains the printer output profile corresponding to the medium type obtained in the step S703 from the media profile list 300 stored in advance in the storage unit 204 of the printing apparatus 200, and proceeds with the process to a step S705.

In the step S705, the CPU 101 obtains the rendering intent specified on the operation unit 205 of the printing apparatus 200, and proceeds with the process to a step S706.

In the step S706, the CPU 101 designates the input profile 603 obtained in the step S702 as the input profile. Further, the CPU 101 designates the printer output profile 604 obtained in the step S704 as the printer output profile.

Also, the CPU 101 designates the rendering intent 605 obtained in the step S705 as the rendering intent for the printer output profile 604. Then, the CPU 101 executes the color conversion process 600 described above, and proceeds with the process to a step S707.

In the step S707, the CPU 101 obtains the monitor profile corresponding to the display unit 106, which is stored in storage unit 104, and proceeds with the process to a step S708.

In the step S708, the CPU 101 designates the printer output profile 604 obtained in the step S704 as the printer output profile that will be the input profile of the color conversion process 601. Further, the CPU 101 designates the monitor profile 607 obtained in the step S707 as the monitor profile to be the output profile in the color conversion process 601. Further, the CPU 101 designates the rendering intent 605 as the rendering intent for the printer output profile 604. Then, the CPU 101 executes the color conversion process 601 described above and proceeds with the process to a step S709.

In the step S709, the CPU 101 stores the print target image data obtained in the color conversion process in the step S708 in the storage unit 104 and ends the process.

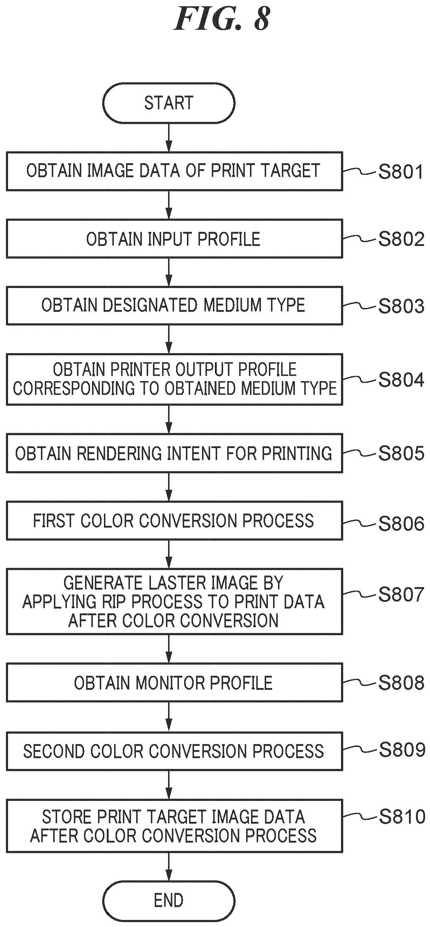

Hereinafter, a second embodiment will be described with reference to FIG. 8. The description will focus on differences from the above-described embodiment, and the descriptions about the same matters will be omitted. This embodiment is the same as the first embodiment except that a rasterizing step of applying a rasterizing process to the image data is executed between the first conversion step and the second conversion step.

FIG. 8 is a flowchart illustrating the color conversion process performed in an image processing apparatus in a second embodiment to simulate a printed matter output from the printing apparatus. As shown in FIG. 8, in a step S801, the CPU 101 obtains the print data to be printed by the printing apparatus 200, which is stored in the storage unit 104, and proceeds with the process to a step S802. The print data is data described in a page description language, and includes, for example, a character string, a line or a figure by a vector, and an image such as a photograph.

In the step S802, the CPU 101 obtains the input profile to be used during printing from the storage unit 204 of the printing apparatus 200, and proceeds with the process to a step S803.

In the step S803, the CPU 101 displays the print image confirmation screen 400 on the operation unit 105 of the image processing apparatus 100 and obtains the medium type selected in the medium type selection list 401a in the print image confirmation screen 700. And then, the process proceeds to a step S804.

In the step S804, the CPU 101 obtains the printer output profile corresponding to the medium type obtained in the step S803 from the media profile list 300 stored in advance in the storage unit 204 of the printing apparatus 200, and proceeds with the process to a step S805.

In the step S805, the CPU 101 obtains the rendering intent designated on the operation unit 205 of the printing apparatus 200, and proceeds with the process to a step S806.

In the step S806, the CPU 101 designates the input profile 603 obtained in the step S802 as the input profile. Further, the CPU 101 designates the printer output profile 604 obtained in the step S804 as the printer output profile. Further, the CPU 101 designates the rendering intent 605 obtained in the step S805 as the rendering intent for the printer output profile 604. Then, the CPU 101 executes the color conversion process 600 described above and proceeds with the process to a step S807.

In the step S807, the CPU 101 applies a RIP process (rasterizing process) to the data obtained in the color conversion process in the step S806 to generate a raster image (a rasterizing step). After the execution in the step S807, the process proceeds to a step S808.

In the step S808, the CPU 101 obtains the monitor profile corresponding to the display unit 106, which is stored in the storage unit 104, and proceeds with the process to a step S809.

In the step S809, the CPU 101 designates the printer output profile 604 obtained in the step S804 as the printer output profile 606 in the color conversion process 601. Further, the CPU 101 designates the monitor profile 607 obtained in the step S808 as the monitor profile in the color conversion process 601, and designates the rendering intent 608 as the rendering intent for the monitor profile 607. Then, the CPU 101 executes the color conversion process 601 described above and proceeds with the process to a step S810. The target of the color conversion process in the step S809 is the raster image generated in the

### step S807.

In the step S810, the CPU 101 stores the print object image obtained by the color conversion process in the step S809 in the storage unit 104 and ends the process. As described above, in this embodiment, the RIP process is executed in the step S807 before the color conversion process in the step S809. Accordingly, the image of the background part which is not included in the print data is complemented, and the color conversion process can be performed in the step S809 even for the complemented part. Therefore, the preview image of the printed matter in which the ground color of the print sheet is considered can be reproduced on the display unit 106 with high accuracy.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While various embodiments of the present disclosure have been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A computer program product including a color conversion program causing a computer (101) to execute a control method comprising:
a first conversion step (600) of converting a color space of image data by sequentially using
an input profile (603) that has first color information and receives image data, and
a print profile (604) that has second color information and outputs image data as print data when printing the image data by a printing apparatus (200); and
a second conversion step (601) of converting the color space of the image data after the conversion in the first conversion step (600) by sequentially using
the print profile (604), and
a display profile (607) that has third color information and outputs the image data as display data in displaying the image data on a display unit (106).

2. The computer program product according to claim 1, wherein the print profile (604) is used when a rendering intent (605) is set in the first conversion step (600).

3. The computer program product according to claim 2, wherein the rendering intent (605) designates relative chromaticity retention.

4. The computer program product according to claim 3, wherein the first conversion step (600) further includes performing a conversion that cancels a ground color component of a print sheet used when printing by the printing apparatus (200) is performed by using the print profile in a state where the rendering intent (605) is set.

5. The computer program product according to claim 1, wherein the display profile (607) is used in a state where a rendering intent (608) is set in the second conversion step.

6. The computer program product according to claim 5, wherein the rendering intent (608) designates absolute chromaticity retention, and
the second conversion step (601) includes performing a conversion that does not cancel a ground color component of a print sheet used when printing by the printing apparatus (200) by using the display profile (607) in a state where the rendering intent (608) is set.

7. The computer program product according to claim 1, wherein in the first conversion step, the color space of the image data input to the input profile (603) is converted from a model dependent color space set for each model of the printing apparatus (200) into a model independent color space that does not depend on the model of the printing apparatus (200), by using the input profile (603).

8. The computer program product according to claim 8, wherein in the first conversion step (600), the color space of the image data converted by the input profile (603) is converted from the model independent color space into the model dependent color space by using the print profile (604).

9. The computer program product according to claim 9, wherein in the second conversion step (601), the color space of the image data converted in the first conversion step (600) is converted from the model dependent color space to the model independent color space by using the print profile (604).

10. The computer program product according to claim 10, wherein in the second conversion step (601), the color space of the image data converted by the print profile (604) is converted from the model independent color space to a color space reproducible by the display unit (106) using the display profile (607).

11. The computer program product according to claim 1, wherein the print profile (604) is provided for each type of print sheet used for printing by the printing apparatus (200), and
the print profile (604) corresponding to the print sheet selected in the printing apparatus (200) from among a plurality of types of print sheets mounted on the printing apparatus (200) is used in each of the first conversion step (600) and the second conversion step (601).

12. The computer program product according to claim 1, wherein the control method further comprises a rasterizing step (S807) of applying a rasterizing process to the image data between the first conversion step (600) and the second conversion step (601).

13. The computer program product according to claim 1, wherein a color tone of the printed matter obtained by printing the image data converted in the first conversion step (600) by the printing apparatus (200) is visually recognized to be identical to a color tone of the display image obtained by displaying the image data converted in the second conversion step (601) on the display unit (106).

14. A color conversion apparatus (100) comprising:
one or more memories (104, 204) storing
an input profile (603) that has first color information and receives image data;
a print profile (604) that has second color information and outputs the image data as print data when printing the image data by a printing apparatus (200); and
a display profile (607) that has third color information and outputs the image data as display data in displaying the image data on a display unit (106);
a first conversion means (600) for converting a color space of image data by sequentially using the input profile (603) and the print profile (604); and
a second conversion means (601) for converting the color space of the image data after the conversion by the first conversion means (600) by sequentially using the print profile (604) and the display profile (607).

15. A color conversion method comprising:
a first conversion step (600) of converting a color space of image data by sequentially using
an input profile (603) that has first color information and receives image data, and
a print profile (604) that has second color information and outputs image data as print data when printing the image data by a printing apparatus (200); and
a second conversion step (601) of converting the color space of the image data after the conversion in the first conversion step by sequentially using
the print profile (604), and
a display profile (607) that has third color information and outputs the image data as display data in displaying the image data on a display unit (106).
